# EUROPEAN PATENT APPLICATION

(11) **EP 0 599 619 A1**
(43) Date of publication of application: **01.06.1994**
(21) Application number: 93309357.7
(22) Date of filing: 24.11.1993
(51) Int. Cl.: G21C 17/022, G21C 19/28

(54) **Inhibition of radioactive cobalt deposition in water cooled nuclear reactors with zinc depleted in Zn-64**

(30) Priority: 25.11.1992 US 981980
(71) Applicant: GENERAL ELECTRIC COMPANY, Schenectady, NY 12345 (US)
(72) Inventor: Alexander, James Edward, San Jose, California 95123 (US); Cowan II, Robert Lee, Livermore, California 94550 (US); Marble, William Joel, Gilroy, California 95020 (US); Ruiz, Carl Philip, Fremont, California 94539 (US)
(74) Representative: Lupton, Frederick

(57) **Abstract**

The method of continuously injecting zinc compounds into nuclear reactor coolant water for the purpose of inhibiting the deposition of radioactive cobalt on the interior surfaces of a water cooled nuclear reactor is improved through the use of isotopically depleted zinc.

## Description

### FIELD OF THE INVENTION

This invention is concerned with the operation and pesonal safety in water cooled nuclear reactor plants. The invention is particularly concened with improved means for preventing the deposition of radioactive cobalt in the water-bearing vessels of such plants.

### BACKGROUND OF THE INVENTION

A significant health hazard for personnel operating and servicing water cooled nuclear fission reactor plants is the accumulation of radioactive substances throughout the structures making up the coolant water carrying systems of the plant. For example, during maintenance shutdowns workers are exposed to internal vessel walls and conduit surfaces, and radioactive materials retained in oxide films which accumulate on internal surfaces of such water carrying systems constitute a major source of radiation exposure.

The introduction of certain metallic ions, including zinc, into nuclear reactor coolant water systems has been utilized to remove or reduce radioactive material deposition. The form and manner of applying zinc is a factor in its effectiveness in inhibiting such deposits. For instance, zinc has been employed as a salt with anions which were detrimental to the reactor or its operation, and the use of the active metallic ions prior to operation or during maintenance shutdowns have been of limited effectiveness in long term operations.

Radiation buildup within the water cooling system of a nuclear reactor plant, primarily due to Co-60, results from two phenomena: (1) Co-60 which is dissolved in the coolant water incorporates into the crystal structure of the oxide film on metal structures such as stainless steel, as the oxide forms thereon, and (2) Co-60 sorbs onto the surfaces of particles carried within the reactor coolant water or adheres on fuel components. Particles which contain sorbed Co-60 tend to deposit in regions of the system of relatively lower water flow velocity. This results in regions of higher radioactive residue which are frequently designated as hot spots, although the deposits can occur uniformly under certain conditions of particle size and surface change.

Very dilute concentrations of zinc have been used in nuclear reactor coolant water to impede the incorporation of Co-60 into the oxide film. Examples of means for applying zinc oxide are described in detail in U.S. Letters Patent No. 4,759,900, issued July 26, 1988. The applied zinc has been determined to activate to form Zn-65 as a result of neutron capture by naturally occurring Zn-64. Although this activity also builds up within the cooling system, it results in significantly lower dose rates than when Co-60 dominates.

### SUMMARY OF THE INVENTION

The present invention is set forth in claims 1, 5, 9 and 15.

This invention comprises an improved means for inhibiting radioactive cobalt deposition through the application of zinc to the coolant water of a nuclear reactor plant. The improved means of the invention minimizes potentially adverse effects of the procedure without detracting from the positive advantage of the zinc upon abating cobalt deposition.

The zinc can be administered in a variety of compounds or chemical forms, and feeding techniques or means such as described in U.S. Patent No. 4,759,900.

### DETAILED DESCRIPTION OF THE INVENTION

It has been discovered that Zn-65, which is produced from neutron activation of Zn-64, tends to exhibit an adsorption behavior on particulates similar to the sorption characteristic observed for Co-60. This phenomenon of zinc in the environment of a nuclear reactor limits its effectiveness in reducing the dispersion of radiation, especially for decreasing hot spot dose rates.

This invention comprises the use of zinc for inhibiting the deposition of radioactive cobalt in a water-bearing vessel of a water cooled nuclear reactor, which has been depleted in the Zn-64 isotope. This use of zinc depleted in the Zn-64 isotope reduces the formation of radioactive hot spots within the nuclear reactor water cooling system and thereby additional occupational exposure of plant personnel to this source of radiation.

The zinc depleted in the Zn-64 isotope comprises any source of zinc or suitable compounds thereof as disclosed n U.S. Patent No. 4,759,900 wherein the zinc component has been reduced in its Zn-64 isotope content by a suitable isotope separation process. The greater the Zn-64 isotope depletion, the more effective the means of this invention in achieving its objective. However, the depletion method of Zn-64 should remove at least about 5 percent of the isotope of its natural content, and preferably about 25% to 99% percent.

Suitable forms or compositions of the depleted zinc agent, and means for their application are as set forth in U.S. Patent No. 4,759,900. For example, it is preferred that the zinc addition be carried out on a continuous basis throughout the term of operation of the nuclear reactor, thereby providing a constant replenishment of zinc ions.

Relatively small concentrations of depleted zinc, or compounds thereof, are sufficient to achieve inhibition of the radioactive cobalt deposition. The actual amount is not critical and can vary over a relatively wide range. For example, in many application a concentration of from about 1 to about 1000 parts per billion by weight, and preferably about 2 up to about 100 parts per billion by weight maintained in the reactor coolant water during operation of this nuclear reactor will provide optimum results.

As noted in the aforementioned patent, this invention can be applied to any water-bearing vessel, in a nuclear reactor in which cobalt can be present. Such vessels includes conduits, pipes or tubes, shelves, tanks and the like containers in general whose surfaces come into contact with the primary coolant. Recirculation conduits are of particular concern since they constitute a significant source of radiation exposure to maintenance and service personnel. Additional areas of concern include the region beneath the reactor pressure vessel where activity is associated with the in-core and control rod drive housings, and the reactor water cleanup system. Suitable compounds comprising depleted zinc can be added through feed lines to such vessels or to any recirculation conduits extending to such vessels.

Depleted zinc compounds, such as zinc oxide, can be introduced in any form which enables the compound to be dissolved in the reactor coolant water. Typical forms include slurries, pastes, sintered oxide pellets and preformed solutions. With pastes, sintered oxides or slurries, the zinc oxide or the like is preferably in the form of a finely divided powder, with fumed zinc oxide or equivalent being optimum. The zinc oxide contents in these pastes and slurries are not critical because the concentrations in the reactor coolant water where the zinc oxide is needed may be controlled by the rate of addition of the paste or slurry to the incoming water or by the flow rate of water past sintered pellets. In many instance paste will have zinc oxide contents ranging from about 25 percent to about 95 percent by weight, and preferably from about 40 percent to about 80 percent by weight. Slurries will generally contain from about 0.1 percent to about 20 percent by weight, and preferably from about 1 percent to about 5 percent by weight. Zinc oxide sintered pellets will be up to 99% by weight. Preformed solutions can be obtained by flowing water past a bed of zinc oxide pellets.

The various means or apparatus which may be used for adding the zinc oxide are disclosed and illustrated in U.S. Patent No. 4,759,900.

This invention is applicable to water cooled nuclear fission reactors in general, including light water reactors and heavy water reactors. The invention finds particular utility in pressurized water reactors and boiling water reactors.

## Claims

1. A method for inhibiting the deposition of radioactive cobalt in a water-bearing vessel of a water cooled nuclear reactor, said method comprising:
adding zinc depleted in the Zn-64 isotope to water entering said water-bearing vessel, continuously during operation of said water-cooled nuclear reactor.

2. The method of claim 1, in which the amount of zinc depleted in the Zn-64 isotope added is selected to achieve a concentration of about 1 to about 1,000 parts per billion zinc n said water-bearing vessel.

3. The method of claim 1, in which the amount of zinc depleted in the Zn-64 isotope added is selected to achieve a concentration of about 2 to about 100 parts per billion zinc in said water-bearing vessel.

4. The method of claim 1, in which the zinc depleted in the Zn-64 isotope is added in the form of a member selected from the group consisting of a water-based slurry, a water-based paste a water-based solution, and sintered oxide pellets.

5. A method for inhibiting the deposition of radioactive cobalt in a water-bearing vessel of a water cooled nuclear reactor said method comprising: adding a paste comprised zinc oxide composed of zinc depleted in the Zn-64 isotope and water to water entering said water-bearing vessel continuously during operation of said water cooled nuclear reactor.

6. The method of claim 5, in which the amount of zinc oxide composed of zinc depleted in the Zn-64 isotope in said paste is from about 50 percent to about 99 percent by weight.

7. The method of claim 5, in which the amount of zinc oxide composed of zinc depleted in the Zn-64 isotope in said paste is about 40 percent to about 80 percent by weight.

8. A method for inhibiting the deposition of radioactive cobalt in a water-bearing vessel of a water cooled nuclear reactor, said method comprising:
adding an aqueous solution of zinc composed of zinc depleted in the Zn-64 isotope to water entering said water-bearing vessel, continuously during operation of said water cooled nuclear reactor.

9. A method for inhibiting the deposition of radioactive cobalt in a water-bearing vessel of a water cooled nuclear reactor, said method comprising:
adding a slurry of zinc oxide composed of zinc depleted in the Zn-64 isotope in water to water entering said water-bearing vessel, continuously during operation of said water cooled nuclear reactor.

10. The method of claim 9, in which the content of zinc oxide composed of zinc depleted in the Zn-64 isotope in the slurry is from about 1 percent to about 20 percent by weight.

11. The method of claim 9, in which the content of zinc oxide composed of zinc depleted in the Zn-64 isotope in the slurry is from about 1 percent to about 5 percent by weight.

12. The method of claim 9, in which the zinc oxide composed of zinc depleted in the Zn-64 isotope in the slurry is fumed zinc oxide.

13. The method of claim 9, in which the rate of addition of said slurry to the water is selected to produce a zinc oxide content in the water of the water-bearing vessel of about 1 to about 1,000 parts per billion.

14. The method of claim 9, in which the rate of addition of said slurry to the water is selected to produce a zinc oxide content in the water of the water-bearing vessel of about 10 to about 100 parts per billion.

15. A method for inhibiting the deposition of radioactive cobalt in a water-bearing vessel of a water cooled nuclear reactor, said method comprising:
adding sintered zinc oxide pellets composed of zinc depleted in the Zn -64 isotope in water to water entering said water-bearing vessel, continuously during operation of said water cooled nuclear reactor.
